# Europäisches Patentamt

# European Patent Office

# Office européen des brevets

(11) Publication number: **0 126 335**
**B1**

(12) **EUROPEAN PATENT SPECIFICATION**

(45) Date of publication of patent specification: **07.03.90**

(21) Application number: **84104698.0**

(22) Date of filing: **26.04.84**

(51) Int. Cl.⁵: **F 16 J 15/34**

(54) Slide ring sealing.

(30) Priority: **27.04.83 SE 8302360**

(43) Date of publication of application:
**28.11.84 Bulletin 84/48**

(45) Publication of the grant of the patent:
**07.03.90 Bulletin 90/10**

(84) Designated Contracting States:
**AT BE CH DE FR GB IT LI LU NL SE**

(56) References cited:
**DE-A-1 425 454**
**FR-A-1 326 296**
**US-A-3 031 199**
**US-A-3 162 452**
**US-A-3 420 535**

(73) Proprietor: **Anderberg, Göran**
**Torkel Tunnbindaresgränd 6**
**S-230 10 Skanör (SE)**

(72) Inventor: **Anderberg, Göran**
**Torkel Tunnbindaresgränd 6**
**S-230 10 Skanör (SE)**

(74) Representative: **Asketorp, Göran P. et al**
**Lars Holmqvist Patentbyra AB Box 4289**
**S-203 14 Malmö 4 (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to slide ring sealings for sealing of rotating machine parts in order to prevent penetration of an external fluid.

At lead-through shafts in e.g. pumps and mixers the rotating shaft must be sealed against the stationary portion, e.g. the pump housing in order to prevent that fluid penetrates at the transition between the rotating and the stationary portion.

The primary sealing takes place between a slide ring of e.g. artificial coal or cemented hard carbide in the sealing portion and a counter ring, typically provided in stainless steel and cemented hard carbide in the stationary portion.

With regard to the secondary sealing, i.e. the sealing between the shaft and the fluid in the outer surrounding, previously known slide ring sealings essentially can be divided into two groups.

Thus, there are bellow sealings, where a rubber bellow constitutes the secondary sealing and the rubber material is chosen in view of the stated pressure and type of fluid. There are also wedge sealings, where a wedge of Teflon® or similar is pressed down against the shaft.

Common to all the slide ring sealings previously known is that the secondary sealing is placed directly after the primary sealing in front of a spring unit, which aims at taking up movements in the axial direction.

Two examples of the prior art are shown in DE—A—1,425,454 and US—A—3,420,535, which both relate to a special design for fastening a slide ring in relation to the rest of the sealing.

A problem with the sealings of today is that fluid penetrates from behind the sealing, into the spring unit and is spread in all corners of the sealing. Within food industry this is a severe problem, as colonies of bacteria remain in the sealing.

Within cellulose industry this entails that fibrous liquid can penetrate into the spring unit, whereby depositions are built up on the springs. The elasticity is decreased or lost and the sealing starts to leak.

At this type of sealings, it often concerns very high pressures and aggressive liquids, for which reason great precision is required and the rubber material in sealings must be carefully chosen with regard to the specific use.

At high pressures, above about 15—20 bar of hydrostatical pressure, decompression is necessary in order that the pressure against the sealing on the pressure side shall not exceed the pressure on the slide ring side so much that the sealing is destructed.

Today decompression takes place by the fact that the shaft is provided with a step in order that the balanced sealing is to be mounted or by the fact that a special sleeve is mounted on the shaft.

Another problem of today is that there is not always control over the sealing. The water and tear of the slide rings must be taken up by the elastic portion in the sealing and at e.g. wedge sealings wear and tear on the shaft by the wedge portion constitutes an additional uncontrollable factor.

Still another problem with the slide ring sealings of today is that it is difficult to axially fix the sealing in the right position and that it can be difficult to reach in order to tighten stop screws in the rear edge of the sealing being built in in e.g. a stuffing box space.

An object with the present invention is to provide a slide ring sealing which is totally encased and moreover has a smooth and hygienic outer surface.

A further object with the present invention is to provide a slide ring sealing with a built-in, hydrostatic pressure balancing, whereby the sealing functions at low pressures as well as at high pressures.

An additional object with the present invention is to provide a slide ring sealing which does not damage the shaft, as for example damages due to crevice corrosion and tear and wear from wedge sealings.

Still another object is to provide a slide ring sealing which is simple to mount.

These objects are achieved by means of a slide ring sealing for sealing of two relatively each other rotating machine parts, like a shaft leading through a stationary portion, whereby the sealing displays a front and a rear end and comprises a sleeve; a slide ring attached in the front end of the sealing, whereby the slide ring under rotation seals against a counter ring arranged in the stationary portion; an annular inner body comprising a spring unit, which presses the sleeve into the sealing position;, a first sealing element arranged behind the spring unit in the slide ring sealing, between the sleeve and the inner body; and a fixation and secondary sealing unit for attachment and sealing against the shaft, the sleeve being axially movable in relation to the inner body, characterized in that the first sealing element is arranged at the rear edge of the sleeve and moveable with the sleeve so that the spring space in the inner body and the whole contact area between the sleeve and the inner body, in front of said first sealing element, is sealed and uneffected by external medium, whereby is prevented that external medium comes into contact with any part of said contact area and thus that the movability of the sleeve in relation to the inner body is not blocked; and in that the sleeve is provided with at least one longitudinal shoulder, which fits in recesses arranged in the inner body to take up torsional moment.

The slide ring sealing according to the present invention is completely encased with a smooth outer surface, which entails that fluid cannot penetrate into the sealing and that dirt cannot be gathered on or in the sealing. The springs are arranged inside the sealing between the primary and secondary sealing, which entails that these cannot be blocked in their spring movement due to particle gathering in the spring.

The inner hydrostatic balancing entails that the sealing functions both for low and high pressures.

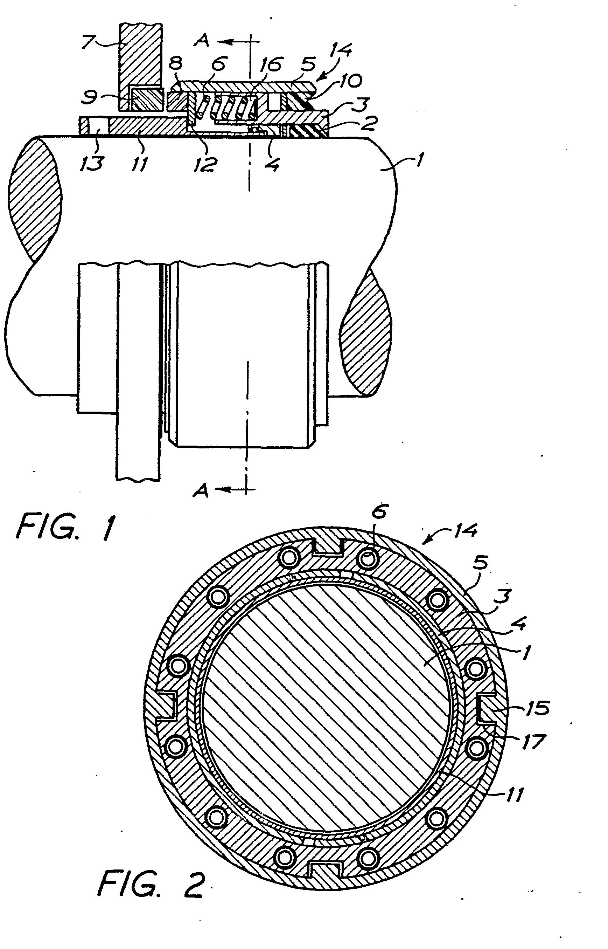

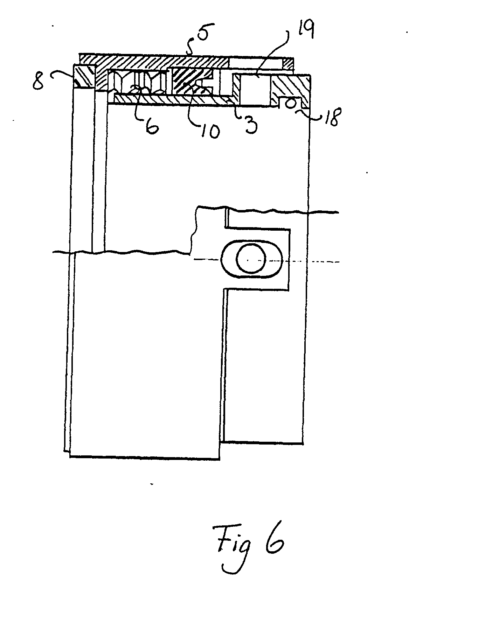

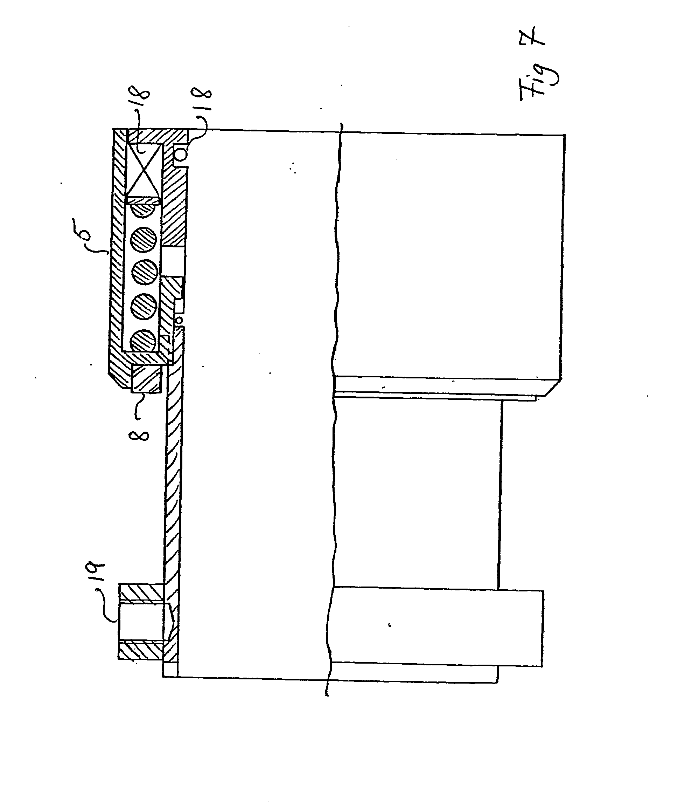

Additional advantages and objects of the present invention appear from the following, detailed specification with reference to the drawings, which show a number of preferred embodiments of the invention. Fig. 1 is a longitudinal cross-sectional view of the slide ring sealing according to the present invention; Fig. 2 is a view taken along line A—A of Fig. 1; Figs. 3 to 7 are longitudinal cross-sectional views of further embodiments of the sealing according to the present invention.

With reference to Fig. 1 a rotating shaft 1 is shown, on which a slide ring sealing 14 is arranged. The slide ring sealing consists of a sleeve 5, in the front end of which a slide ring 8 is fixed. The slide ring seals during rotation against a counter ring 9 fixedly arranged in the stationary portion 7, where the shaft is led through. Inside the sleeve 5 an annular body 3 is mounted comprising grooves 16 for housing springs 6. The inner body 3 is axially displacable in relation to the sleeve and is guided by shoulders 15. Corresponding recesses 17 are arranged in the inner body. One end of the springs 6 bears against the inner body 3 and the other end bears against an annular washer 12 attached in the sleeve and behind the slide ring.

On the inside of the inner body, away from the springs, counted from the slide ring a threaded ring 4 is detachably arranged, which cooperates with a corresponding threading (not shown) in the inner body. The rear end of the inner body 3 is constructed as a radially inwardly extending wedge and between this wedge and the threaded ring 4 a fastening element 2, preferably of rubber, is attached. Finally, in the rear end of the sealing 14 between the sleeve 5 and the inner body 3 a sealing element 10 is arranged, which preferably is constructed as a U-cuff, e.g. of Teflon® with an internal spring construction. Thus, in the embodiment the fixation and sealing unit is represented by one single element, i.e. fastening element 2.

The slide ring sealing 14 in this embodiment is fixed on the shaft 1 by means of an annular tool 11, one end of which has a reduced outer diameter. The tool is brought into the sealing from the slide ring side and fixes the sealing in the right position when the inner body is pulled by the ring 4, which by a bayonet-fitting is connected to the tool 11, which is lengthwise fixed by the washer 12. The sealing in accordance with the embodiment given in Fig. 1 is attached on the shaft 1 by the fact that the rubber element 2 is compressed and pressed against the inner body 3 and the shaft 1, when the ring 4 is screwed in against the rubber element 2 with a hook key in the tool 11. Due to this rubber element 2 the slide ring sealing 14 may be attached to a shaft and there is no need of any further fixation element.

The sealing sleeve 5 is axially movable in relation to the inner body 3 and pressed against the sealing position by means of a number of springs 6 arranged in the inner body 3. Axial displacements due to tear and water of the slide rings are taken up by the spring construction.

As sealing between the inner body 3 and the sealing sleeve 5 serves the sealing element 10, which seals against the external media. The object of the fastening element 2 is to seal against the shaft as well as to attach the sealing 14 against the shaft.

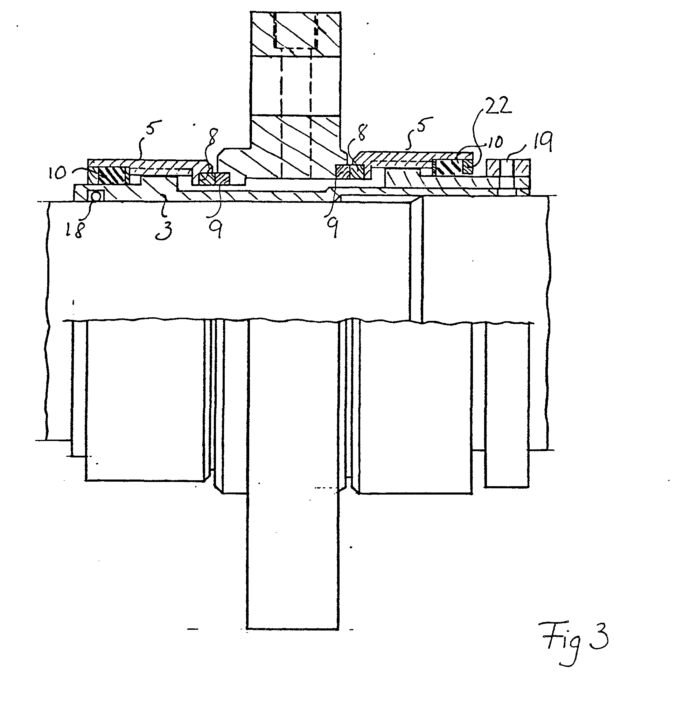

Figures 3 to 7 show as previously mentioned further embodiments of the slide ring sealing according to the invention. The figures are schematic and parts analogue to corresponding parts in Fig. 1. have been given the same reference numerals.

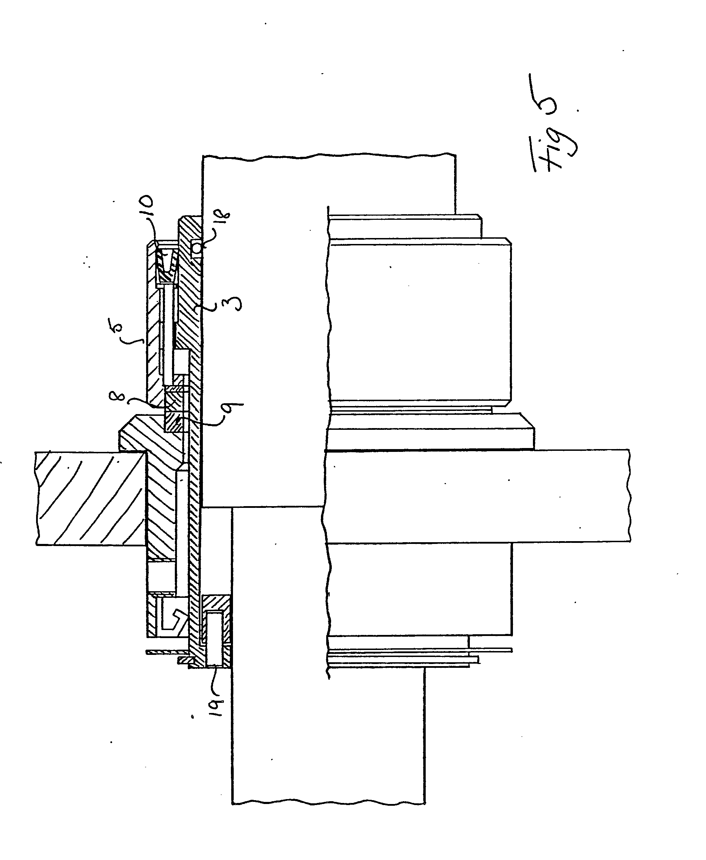

The embodiments shown in Figs. 3 to 7 differ from the embodiment of Fig. 1 in the fact that the fixation and sealing unit (ref. 2 of Fig. 1) is divided into two parts; one fixation element 19 in the form of a screw, a pin or the like, and one sealing element 18. The slide ring sealing of Fig. 5 is provided with a pin in the axial direction.

Fig. 3 shows a double slide ring sealing; i.e. a slide ring sealing which seals on both sides of a stationary portion. The slide ring sealing is provided with a couple of slide rings, each rotating against a respective counter ring 9 arranged on each side of the stationary portion 7.

Fig. 7 shows an embodiment in which the fixation element 19 and the springs 6, the sealing element 10 and 18, the counter ring 9 and the slide ring 8 respectively has been arranged on opposite sides of the stationary portion. Such a construction is applicable when the accessibility on the sealing side is limited.

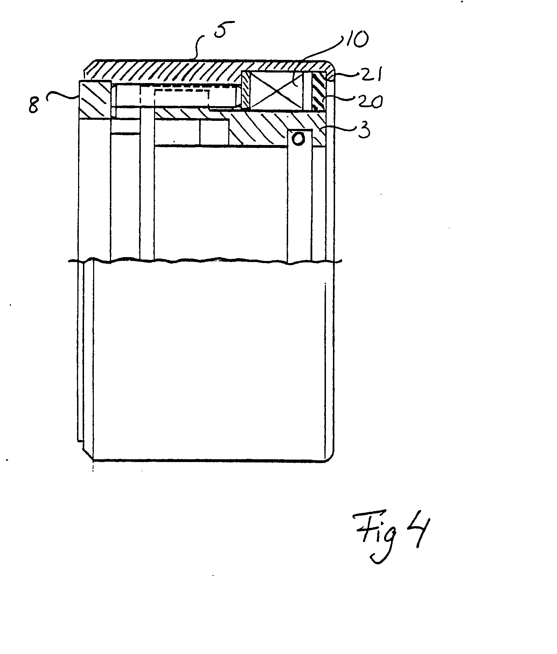

Moreover, in the slide ring sealing shown in Figures 3 to 7 the sealing element 10 is retained by means of a fixed ring as for example 22 in Fig. 3 or by means of a movable washer, e.g. of Teflon®, as 20 in Fig. 4. With reference to Fig. 4 the washer 20 is retained by the fact that the rear end of the sleeve 5 is folded into a lip 21. A compressive force from the external media presses the washer into contact with the sealing element 10.

This fixed ring 22 or movable washer 20 does of course imply an additional sealing of the delicate inner spring unit.

Thus, by the present invention a slide ring sealing is obtained, which rapidly and simply may be attached.

The slide ring sealing is constructed as a close unit. Thereby is prevented that fluid may penetrate into the inner, sensitive portions, which is of the greatest importance within many areas, especially within food industry.

From the medium side there are no slots, cavities or other spaces, where medium may penetrate and thus give rise to dirt pockets, which e.g. within the food industry may be difficult to clean.

The pressure balancing allows a safe and controlled management over a wide pressure area. Moreover, the hydrostatic decompression of the present sealing is balanced in such a way that the composant which works in the direction towards the sealing position is large enough in relation to the one working on the slide ring side.

## Claims

1. Slide ring sealing (14) for sealing of two relatively each other rotating machine parts, like a shaft (1) leading through a stationary portion (7), whereby the sealing displays a front and a rear end and comprises a sleeve (5); a slide ring (8) attached in the front end of the sealing, whereby the slide ring under rotation seals against a counter ring (9) arranged in the stationary portion; an annular inner body (3) comprising a spring unit (6), which presses the sleeve (5) into the sealing position; a first sealing element (10) arranged behind the spring unit in the slide ring sealing (14), between the sleeve (5) and the inner body (3); and a fixation and secondary sealing unit for attachment and sealing against the shaft, the sleeve (5) being axially movable in relation to the inner body, characterized in that the first sealing element (10) is arranged at the rear edge of the sleeve (5) and movable with the sleeve (5) so that the spring space in the inner body (3) and the whole contact area between the sleeve (5) and the inner body (3), in front of said first sealing element (10), is sealed and uneffected by external medium, whereby is prevented that external medium comes into contact with any part of said contact area and thus that the movability of the sleeve (5) in relation to the inner body (3) is not blocked; and in that the sleeve (5) is provided with at least one longitudinal shoulder (15), which fits in recesses (17) arranged in the inner body (3) to take up torsional moment.

2. Sealing according to claim 1, characterized in that the fixation and secondary sealing unit is represented by a fastening element (2).

3. Sealing according to claim 2, characterized in that it is further provided with one against the fastening element adjacent and on the inside of the inner body detachably arranged ring (4) for fastening of the fastening element against the shaft.

4. Sealing according to claim 3, characterized in that the ring (4) is threaded and attached in the inner body (3) and a threaded portion constructed herein.

5. Sealing according to claim 1, characterized in that the fixation and secondary sealing unit is represented by one secondary sealing element (18) and one fixation element (19).

6. Sealing according to any of the previous claims, characterized in that the first sealing element (10) is retained by means of a fixed ring (22).

7. Sealing according to any of the previous claims, characterized in that the first sealing element (10) is retained by means of a movable washer (20).

8. Sealing according to any of the previous claims, characterized in that the first sealing element (10) is a U-shaped cuff including a spring construction.

9. Sealing according to claim 8, characterized in that the U-shaped cuff is made of Teflon®.

10. Sealing according to any one of previous claims, characterized in that it has smooth surfaces showing no pockets on the side turned against the medium.

## Patentansprüche

1. Gleitringdichtung (14) zum Abdichten von zwei relativ zueinander rotierenden Maschinenteilen, wie beispielsweise eine durch einen stationären Teil (7) hindurchgeführte Welle (1), wobei die Dichtung ein vorderes und ein hinteres Ende aufweist und eine Hülse (5), einen am Vorderende der Dichtung angeordneten Gleitring (8), wobei der Gleitring unter Rotation gegen einen im stationären Teil angeordneten Gegenring (9) abdichtet, einen ringförmigen Innenkörper (3) mit einer Federeinheit (6), welche die Hülse (5) in Dichtposition drückt, ein erstes Dichtelement (10), welches hinter der Federeinheit in der Gleitringdichtung (14) zwischen der Hülse (5) und dem Innenkörper (3) angeordnet ist, und eine Befestigungs- und zweite Dichteinheit zur Befestigung an und Abdichtung gegenüber der Welle umfaßt, wobei die Hülse (5) axial relativ zum Innenkörper bewegbar ist, dadurch gekennzeichnet, daß das erste Dichtelement (10) am rückwärtigen Rand der Hülse (5) angeordnet ist und mit der Hülse (5) bewegbar ist, so daß der Federraum im Innenkörper (3) und der gesamte Kontaktbereich zwischen der Hülse (5) und dem Innenkörper (3) vor dem ersten Dichtelement (10) abgedichtet ist und von einem externen Medium unbeeinflußt ist, wodurch verhindert wird, daß das externe Medium mit einem Abschnitt des Kontaktbereiches in Kontakt gelangt, und derart die Bewegbarkeit der Hülse (5) relativ zum Innenkörper (3) nicht blockiert wird, und daß die Hülse (5) wenigstens eine Längsschulter (15) aufweist, welche mit im Innenkörper (3) ausgebildeten Ausnehmungen (17) zur Aufnahme eines Torsionsmomentes zusammenwirkt.

2. Dichtungs nach Anspruch 1, dadurch gekennzeichnet, daß die Befestigungs- und zweite Dichteinheit von einem Befestigungselement (2) gebildet wird.

3. Dichtung nach Anspruch 2, dadurch gekennzeichnet, daß sie weiters mit einem dem Befestigungselement benachbarten und an der Innenseite des Innenkörpers lösbar angeordneten Ring (4) zur Festlegung des Befestigungselements gegenüber der Welle ausgebildet ist.

4. Dichtung nach Anspruch 3, dadurch gekennzeichnet, daß der Ring (4) mit einem Gewinde ausgebildet ist und im Innenkörper (3) in einem darin ausgebildeten Gewindebereich festgelegt ist.

5. Dichtung nach Anspruch 1, dadurch gekennzeichnet, daß die Befestigungs- und zweite Dichteinheit aus einem zweiten Dichtelement (18) und einem Befestigungselement (19) gebildet wird.

6. Dichtung nach einem der vorangehenden Ansprüche, dadurch gekennzeichnet, daß das erste Dichtelement (10) mittels eines befestigten Ringes (22) gehalten wird.

7. Dichtung nach einem der vorangehenden Ansprüche, dadurch gekennzeichnet, daß das erste Dichtelement (10) mittels einer bewegbaren Unterlegscheibe (20) gehalten wird.

8. Dichtung nach einem der vorangehenden Ansprüche, dadurch gekennzeichnet, daß das erste Dichtelement (10) von einer U-förmigen, eine Federkonstruktion beinhaltenden Manschette gebildet wird.

9. Dichtung nach Anspruch 8, dadurch gekennzeichnet, daß die U-förmige Manschette aus Teflon® besteht.

10. Dichtung nach einem der vorangehenden Ansprüche, dadurch gekennzeichnet, daß sie keine Vertiefungen aufweisende, glatte Oberfläche auf der zum Medium gewandten Seite aufweist.

**Revendications**

1. Jointure à joint annulaire glissant (14) destinée à joindre de façon étanche deux pièces de machine tournant l'une par rapport à l'autre, telles qu'un arbre (1) passant à travers une partie stationnaire (7), la jointure présentant une extrémité avant et une extrémité arrière et comportant une douille (5); un joint annulaire glissant (8) fixé à l'extrémité avant de la jointure, le joint annulaire assurant en rotation l'étanchéité avec un contre-anneau (9) disposé dans la partie stationnaire; un corps annulaire intérieur (3) comportant une unité de ressort (6) qui appuie la douille (5) dans sa position assurant l'étanchéité; un premier élément d'étanchéité (10) disposé dans la jointure à joint annulaire glissant (14) derrière l'unité de ressort entre la douille (5) et le corps intérieur (3); et une unité de fixation et d'étanchéité secondaire destinée à être fixée contre l'arbre et à assurer l'étanchéité avec celui-ci, la douille (5) étant mobile axialement par rapport au corps intérieur, caractérisée en ce que le premier élément d'étanchéité (10) est disposé à l'extrémité arrière de la douille (5) et de façon à se déplacer avec la douille (5) de sorte que l'espace du ressort dans le corps intérieur (3) et toute la surface de contact entre la douille (5) et le corps intérieur (3) située devant ce premier élément d'étanchéité (10) sont rendus étanches et insensibles à un milieu extérieur, ce qui empêche qu'un milieu extérieur vienne en contact avec une partie quelconque de cette surface de contact et ne bloque la mobilité de la douille (5) par rapport au corps intérieur (3), et en ce que la douille (5) est pourvue d'au moins un épaulement longitudinal (15) qui s'adapte dans des logements (17) disposés dans le corps intérieur (3) pour absorber le moment de torsion.

2. Jointure selon la revendication 1, caractérisée en ce que l'unité de fixation et d'étanchéité secondaire est représentée par un élément de fixation (2).

3. Jointure selon la revendication 2, caractérisée en ce qu'elle est en outre pourvue d'un anneau (4) disposé de façon amovible, adjacent à l'élément de fixation et sur le côté intérieur du corps intérieur, afin de fixer sur l'arbre l'élément de fixation.

4. Jointure selon la revendication 3, caractérisée en ce que l'anneau (4) est fileté et fixé au corps intérieur (3) et à une partie filetée ménagée dans celui-ci.

5. Jointure selon la revendication 1, caractérisée en ce que l'unité de fixation et d'étanchéité secondaire est représentée par un élément d'étanchéité secondaire (18) et un élément de fixation (19).

6. Jointure selon l'une des revendications précédentes, caractérisée en ce que le premier élément d'étanchéité (10) est retenu au moyen d'un anneau fixé (22).

7. Jointure selon l'une des revendications précédentes, caractérisé en ce que le premier élément d'étanchéité (10) est retenu au moyen d'un rondelle amovible (20).

8. Jointure selon l'une des revendications précédentes, caractérisée en ce que le premier élément d'étanchéité (10) est un manchon en forme de U comportant un dispositif de ressort.

9. Jointure selon la revendication 8, caractérisée en ce que le manchon en forme de U est fabriqué en Teflon®.

10. Jointure selon l'une des revendications précédentes, caractérisée en ce qu'elle présente des surfaces lisses dépourvues de poches sur la face tournée vers le milieu.

EP 0 126 335 B1

FIG. 1

FIG. 2

1

Fig 3

Fig 4

Fig 5

Fig 6

Fig 7